Europäisches Patentamt

European Patent Office

Office européen des brevets

(19)

(11) Veröffentlichungsnummer: **0 088 068**

**A1**

(12) # EUROPÄISCHE PATENTANMELDUNG

(21) Anmeldenummer: **83890007.4**

(22) Anmeldetag: **21.01.83**

(51) Int. Cl.³: **G 01 F 9/00**

(30) Priorität: **22.01.82 AT 228/82**

(43) Veröffentlichungstag der Anmeldung:
**07.09.83 Patentblatt 83/36**

(84) Benannte Vertragsstaaten:
**CH DE FR GB IT LI NL SE**

(71) Anmelder: **Ing. Franz Mitterbauer Gesellschaft m.b.H. & Co. KG.**
**In der Au 15**
**A-4662 Steyrermühl(AT)**

(72) Erfinder: **Pomikacsek, Josef, Dipl.-Ing.**
**Esplanade 27**
**A-4810 Gmunden(AT)**

(74) Vertreter: **Hübscher, Helmut, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020(AT)**

(54) Vorrichtung zum Bestimmen des Kraftstoffgesamtverbrauches eines Kraftfahrzeuges.

(57) Bei einer Vorrichtung zum Bestimmen des Kraftstoffgesamtverbrauches eines Kraftfahrzeuges ist ein Meßwertgeber (2) für den Füllstand des Vorratsbehälters (1) für den Kraftstoff vorgesehen.

Un mit einfachen Mitteln den Kraftstoffgesamtverbrauch auch über mehrere Vorratsbehälterfüllungen hinweg bestimmen zu können, ist der periodisch abfragbare Meßwertgeber (2) an zwei aus der Differenz zwischen jeweils zwei aufeinander abgefragten Meßwerten einerseits die Zunahme und anderseits die Abnahme des Füllstandes des Vorratsbehälters (1) bestimmenden Auswertungsschaltungen (3,4) angeschlossen, denen je ein Summenspeicher (5, 8) mit einer Anzeigeeinrichtung (6,9) für die dem Vorratsbehälter (1) insgesamt zugeführte bzw. aus dem Vorratsbehälter (1) insgesamt entnommene Kraftstoffmenge nachgeordnet ist.

EP 0 088 068 A1

Croydon Printing Company Ltd.

- 1 -

## Vorrichtung zum Bestimmen des Kraftstoffgesamtver-
## brauches eines Kraftfahrzeuges

Die Erfindung bezieht sich auf eine Vorrichtung zum Bestimmen des Kraftstoffgesamtverbrauches eines Kraftfahrzeuges mit einem Vorratsbehälter für den Kraftstoff und einem Meßwertgeber für den Füllstand des Vorratsbehälters.

Üblicherweise wird bei Kraftfahrzeugen der Füllstand des Vorratsbehälters für den Kraftstoff angezeigt, aus dem auf den Kraftstoffverbrauch geschlossen werden kann. Eine Registrierung des Kraftstoffgesamtverbrauches über mehrere Füllungen des Vorratsbehälters ist jedoch nicht möglich.

Sind Verbrauchsmeßvorrichtungen vorgesehen, die den augenblicklichen Kraftstoffverbrauch anzeigen, so kann über eine Summierung dieser angezeigten Verbrauchswerte der Kraftstoffgesamtverbrauch über längere Zeiträume ermittelt werden, unabhängig davon, ob der Vorratsbehälter für den Kraftstoff mehrmals gefüllt wurde oder nicht. Da die üblichen Verbrauchsmeßvorrichtungen für den augenblicklichen Kraftstoffverbrauch keine genauen Verbrauchsmengen bestimmen können, ist auch die aus diesen Verbrauchswerten ermittelte Kraftstoffgesamtmenge fehlerbehaftet, wobei sich die Gefahr einer Summierung der Fehler der Einzelwerte ergibt.

Der Erfindung liegt somit die Aufgabe zugrunde, diese Mängel zu vermeiden und eine Vorrichtung zum Bestimmen des Kraftstoffgesamtverbrauches eines Kraftfahrzeuges der eingangs geschilderten Art so zu verbessern, daß mit einfachen Mitteln der Kraftstoffgesamtverbrauch auch über mehrere Vorratsbehälterfüllungen hinweg mit geringen Toleranzen bestimmt werden kann.

Die Erfindung löst die gestellte Aufgabe dadurch, daß der periodisch abfragbare Meßwertgeber an zwei aus der Differenz zwischen jeweils zwei aufeinanderfolgend abgefragten Meßwerten einerseits die Zunahme und anderseits die Abnahme des Füllstandes des Vorratsbehälters bestimmenden Auswertungsschaltungen angeschlossen ist, denen je ein Summenspeicher mit einer Anzeigeeinrichtung für die dem Vorratsbehälter insgesamt zugeführten bzw. aus dem Vorratsbehälter insgesamt entnommene Kraftstoffmenge nachgeordnet ist.

Da der Meßwertgeber periodisch abgefragt wird, bestimmt die Differenz zwischen jeweils zwei aufeinanderfolgenden Meßwerten die Füllstandsänderung innerhalb der Abfragungsperiode. Es kann demnach aus dieser Differenz in den vorgesehenen Auswertungsschaltungen einerseits die zugeführte und anderseits die entnommene Kraftstoffmenge ermittelt werden, so daß in den den Auswertungsschaltungen nachgeordneten Summenspeichern für diese Werte die insgesamt zugeführte bzw. insgesamt entnommene Kraftstoffmenge gespeichert wird. Fehlmessungen hinsichtlich des Füllstandes auf Grund beispielsweise von Schwankungen des Flüssigkeitsspiegels im Vorratsbehälter spielen dabei keine Rolle hinsichtlich der Genauigkeit des angezeigten Gesamtverbrauches, weil wegen der vorgenommenen periodischen Differenzmessungen ein Fehler durch die nachfolgende Messung ausgeglichen wird, die eine um die vorangegangene Fehlmessung korrigierte Füllstandsänderung ergibt. Darüber hinaus wird durch die Messung einerseits der dem Vorratsbehälter entnommenen Kraftstoffmenge und anderseits der zugeführten Kraftstoffmenge eine Überprüfungsmöglichkeit des angegebenen Gesamtverbrauches geschaffen, weil die verbrauchte Kraftstoffmenge der um den jeweiligen Vorratsbehälterinhalt verringerten zugeführten Kraftstoffmenge entsprechen muß.

Die Auswertungsschaltungen müssen unterscheiden können, ob der zuletzt abgefragte Meßwert größer oder kleiner als der vorher abgefragte Meßwert ist, damit die aus den beiden aufeinanderfolgend abgefragten Meßwerten ermittelte Differenz des Füllstandes einer Kraftstoffzunahme oder einer Kraftstoffabnahme zugeordnet werden kann. Obwohl sich für die konstruktive Lösung dieser Bedingungen mehrere Möglichkeiten anbieten, werden besonders einfache Verhältnisse erhalten, wenn in weiterer Ausbildung der Erfindung die Auswertungsschaltungen einen vorzeichenabhängigen Differenzbildner aufweisen, der einerseits an den Meßwertgeber und anderseits an ein Zwischenspeicher-Schieberegister für den Meßwert angeschlossen ist. Der in periodischen Zeitintervallen vom Meßwertgeber erhaltene Meßwert wird demnach zur Differenzbildung mit dem jeweils vorher abgefragten Meßwert dem Differenzbildner zugeführt, der den vorher abgefragten Meßwert aus dem Zwischenspeicher-Schieberegister erhält. Jeder Meßwert wird nämlich in das Zwischenspeicher-Schieberegister eingelesen und bewirkt, daß der vorher eingelesene, gespeicherte Wert ausgelesen und an den Differenzbildner weitergegeben wird. Auf Grund der Vorzeichenabhängigkeit des Differenzbildners wird in den Auswertungsschaltungen für die Kraftstoffzunahme bzw. für die Kraftstoffabnahme nur dann die Differenz gebildet und an den nachgeordneten Summenspeicher abgegeben, wenn die Differenz der aufeinanderfolgend abgefragten Meßwerte eine Zunahme bzw. eine Abnahme anzeigt.

Um die unvermeidbaren Schwankungen des Flüssigkeitsspiegels im Vorratsbehälter während der Fahrt berücksichtigen zu können, kann zwischen der Auswertungsschaltung für die Abnahme des Füllstandes des Vorratsbehälters und dem Meßwertgeber ein Mittelwertbildner vorgesehen sein, der aus einer vorgebbaren Anzahl von abgefragten Meßwerten einen Mittelwert errechnet und diesen Mittelwert im Takt der Abfragungsperioden an die Auswertungsschaltung weitergibt. Mit Hilfe eines entsprechenden Schieberegisters kann die für die Mittelwertbildung erforderliche Anzahl der jeweils letzten Meßwerte ohne besonderen Aufwand zur Verfügung gestellt werden. Mit der Mittelwertbildung werden die Schwankungen des Flüssigkeitsspiegels ausgeglichen, so daß das Gesamtergebnis der Verbrauchsmessung nicht durch einen besonders ungünstigen letzten Meßwert vor der Ablesung des Gesamtverbrauches verfälscht werden kann.

Da der Kraftstoff im allgemeinen nur während des Fahrzeugstillstandes eingefüllt wird, wobei sich keine sich nachteilig auf den Anzeigewert auswirkenden Schwankungen des Flüssigkeitsspiegels ergeben, kann die Messung des zugeführten Kraftstoffes auch auf die Stillstandszeiten des Fahrzeuges beschränkt werden. Zu diesem Zweck kann die Auswertungsschaltung für die Zunahme des Füllstandes des Vorratsbehälters über ein UND-Gatter angesteuert werden, das einerseits an den Meßwertgeber und anderseits an eine Anzeigeeinrichtung für den Fahrzeugstillstand angeschlossen ist. Auf Grund dieses UND-Gatters wird die Auswertungsschaltung für die Zunahme des Füllstandes nur aktiviert, wenn einerseits der Fahrzeugstillstand angezeigt wird und anderseits ein Meßwert vorliegt.

Als Anzeigeeinrichtung für den Fahrzeugstillstand kann ein NOR-Gatter vorgesehen werden, das an einen Geschwindigkeitsgeber und an einen Geber für die Kraftstoffströmung in der Versorgungsleitung des Kraftfahrzeugmotors angeschlossen ist. Die Anzeigeeinrichtung für den Fahrzeugstillstand gibt somit nicht nur den Fahrzeugstillstand über den Geschwindigkeitsgeber bekannt, sondern spricht erst an, wenn der Kraftfahrzeugmotor abgeschaltet ist, was beim Füllen des Vorratsbehälters mit Kraftstoff der Fall sein soll.

Damit mit dem Kraftstoff im Vorratsbehälter kein Mißbrauch getrieben werden kann, ist zu verhindern, daß dem Vorratsbehälter durch den Füllstutzen Kraftstoff entnommen werden kann. Ein solcher mißbräuchlicher Kraftstoffverbrauch könnte durch die Auswertungsschaltung nicht erkannt werden und würde als Verbrauch des Kraftfahrzeugmotors registriert werden. Um dies zu verhindern, kann in einfacher Weise der Füllstutzen des Vorratsbehälters mit einem Sperrgitter verschlossen werden, das das Einführen eines Zapfschlauches od. dgl. wirksam verhindert.

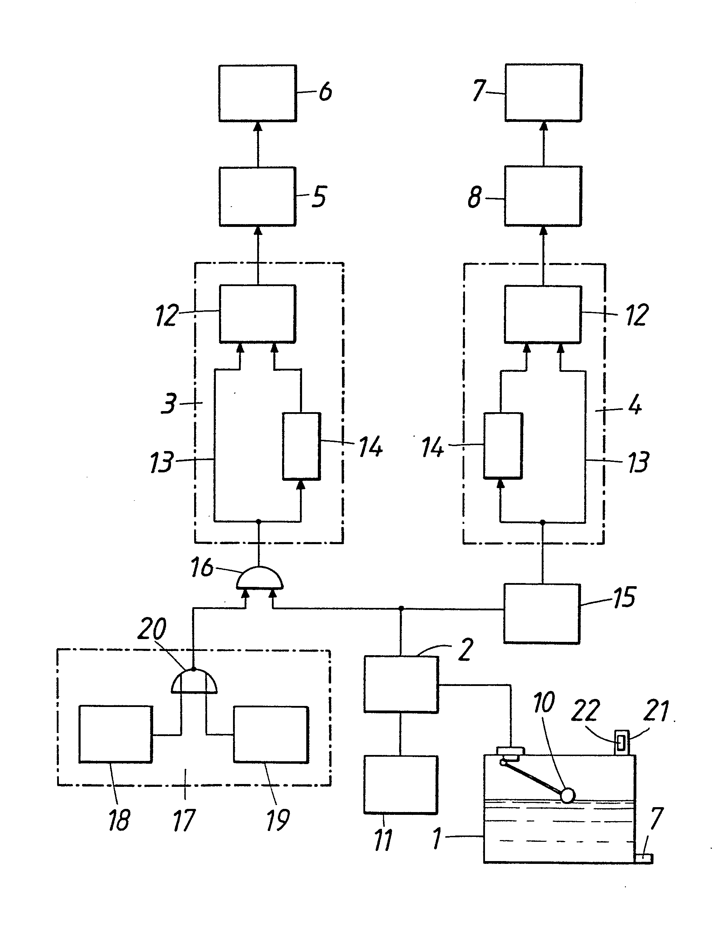

In der Zeichnung ist der Erfindungsgegenstand schematisch dargestellt, und zwar wird eine Vorrichtung zum Bestimmen des Kraftstoffgesamtverbrauches eines Kraftfahrzeuges in einem vereinfachten Blockschaltbild gezeigt.

Die dargestellte Vorrichtung zum Bestimmen des Kraftstoffgesamtverbrauches eines Kraftfahrzeuges besteht im wesentlichen aus einem an einen Vorratsbehälter 1 für den Kraftstoff angeschlossenen Meßwertgeber 2 für den Füllstand des Vorratsbehälters 1 und aus zwei Auswertungsschaltungen 3 und 4, die die Zunahme bzw. die Abnahme des Füllstandes des Vorratsbehälters 1 aus zwei mit zeitlichem Abstand voneinander gemessenen Meßwerten des Meßwertgebers 2 bestimmen. Der Auswertungsschaltung 3 für die Zunahme des Füllstandes des Vorratsbehälters 1 ist ein Summenspeicher 5 zugeordnet, der die ermittelten, zugeführten Kraftstoffmengen summiert und die insgesamt zugeführte Kraftstoffmenge an eine Anzeigeeinrichtung 6 für die eingefüllten Kraftstoffmengen weitergibt. In analoger Weise ist der Auswertungsschaltung 4 für die dem Vorratsbehälter 1 über eine Versorgungsleitung 7 für den Fahrzeugmotor entnommene Kraftstoffmenge ein Summenspeicher 8 mit einer Anzeigeeinrichtung 9 für die insgesamt verbrauchte Kraftstoffmenge nachgeschaltet.

Da die Kraftstoffzunahme- bzw. -abnahme im Vorratsbehälter 1 über die Füllstandsschwankungen erfaßt wird, ist eine Füllstandsanzeigevorrichtung vorzusehen, die gemäß dem Ausführungsbeispiel aus einem Schwimmer 10 besteht, dessen Lage durch den Meßwertgeber 2 erfaßt und an die beiden Auswertungsschaltungen 3 und 4 weitergegeben wird. Der Meßwertgeber 2 wird dabei periodisch abgefragt, wofür eine eine Digitaluhr umfassende Abfrageeinheit 11 vorgesehen ist.

Damit aus zwei aufeinanderfolgend abgefragten Meßwerten die Füllstandsänderung ermittelt werden kann, muß die Differenz aus jeweils zwei aufeinanderfolgenden Meßwerten gebildet werden. Die Auswertungsschaltungen 3, 4 weisen hiefür einen Differenzbildner 12 auf, der einerseits den zuletzt abgefragten Meßwert vom Meßwertgeber 2 über die Eingangsleitung 13 und anderseits den unmittelbar vorher abgefragten Meßwert aus einem an den Meßwertgeber 2 angeschlossenen Zwischenspeicher-Schieberegister 14 erhält. Damit festgestellt werden kann, ob die durch die aufeinanderfolgenden Meßwerte bestimmte Füllstandsänderung eine Kraftstoffzufuhr oder eine Kraftstoffabnahme anzeigt, müssen die Differenzbildner 12 vorzeichenabhängig sein. Durch eine solche Vorzeichenabhängigkeit wird sichergestellt, daß über den Differenzbildner 12 der Auswertungsschaltung 3 für die Kraftstoffzunahme lediglich dann Differenzen an den Summenspeicher 5 weitergegeben werden, wenn der zuletzt abgefragte Meßwert größer als der vorherige Meßwert ist. In ähnlicher Weise spricht der Differenzbildner 12 der Auswertungsschaltung 4 für die Kraftstoffabnahme nur an, wenn der vorhergehend abgefragte Meßwert aus dem Zwischenspeicher-Schieberegister 14 größer als der zuletzt abgefragte Meßwert ist. Mit jedem neuen Meßwert wird der im Zwischenspeicher-Schieberegister 14 gespeicherte Wert ausgelesen und der neue Meßwert eingelesen, so daß mit jedem neuen Meßwert den Differenzbildnern 12 zwei unmittelbar aufeinanderfolgend abgefragte Meßwerte zur Differenzbildung zur Verfügung stehen.

Damit fahrbedingte Schwankungen des Flüssigkeitsspiegels keinen falschen Füllstand vortäuschen können, ist zwischen der Auswertungsschaltung 4 für die Abnahme des Füllstandes des Vorratsbehälters 1 und dem Meßwertgeber 2 ein Mittelwertbildner 15 vorgesehen, der aus einer vorgegebenen Anzahl der zuletzt abgefragten Meßwerte einen Mittelwert bildet, so daß die Auswertungsschaltung 4 nicht den jeweils gemessenen Füllstand, sondern einen Mittelwert der zuletzt gemessenen Füllstandswerte verarbeitet. Die Mittelwerte des Mittelwertbildners 15 müssen selbstverständlich ebenfalls taktweise ausgegeben werden, was technisch mit Hilfe eines Schieberegisters einfach verwirklicht werden kann.

Um Schwankungen hinsichtlich des Flüssigkeitsspiegels im Vorratsbehälter 1 für die Anzeige der zugeführten Kraftstoffmenge als Fehlerquelle auszuschalten, wird die Auswertungsschaltung 3 für die Zunahme des Füllstandes über ein UND-Gatter 16 angesteuert, das einerseits am Meßwertgeber 2 und anderseits an einer Anzeigeeinrichtung 17 für den Fahrzeugstillstand angeschlossen ist. Der Meßwert des Meßwertgebers 2 wird demnach nur dann an den Differenzbildner 12 weitergegeben, wenn das Fahrzeug zufolge der Anzeigeeinrichtung 17 stillsteht. Die Stillstandsbedingungen werden über einen Geschwindigkeitsgeber 18 und einen Geber 19 für die Kraftstoffströmung in der Versorgungsleitung 7 des Kraftfahrzeugmotors erhalten, welche Geber an ein NOR-Gatter 20 angeschlossen sind. Nur wenn beide Bedingungen, nämlich Stillstand des Fahrzeuges und des Motors, erfüllt sind, wird die Auswertungsschaltung 3 für die in den Vorratsbehälter 1 eingefüllte Kraftstoffmenge aktiviert.

Da der Verbrauch des Kraftfahrzeugmotors angezeigt werden soll, muß verhindert werden, daß Kraftstoff außer durch die Versorgungsleitung 7 dem Vorratsbehälter 1 entnommen werden kann. Aus diesem Grunde ist der Füllstutzen 21 des Vorratsbehälters 1 durch ein Sperrgitter 22 verschlossen, das aus einem zylindrischen Mantel und einem Boden besteht, so daß durch den Füllstutzen 21 kein Zapfschlauch od. dgl. in den Vorratsbehälter 1 eingeführt werden kann.

Die Erfindung ist selbstverständlich nicht auf das dargestellte Ausführungsbeispiel beschränkt. So kann beispielsweise die periodische Abfrage des Meßwertgebers 2 herangezogen werden, um eine Kraftstoffentnahme, die nicht durch den Verbrauch des Motors bestimmt wird, anzuzeigen. Übersteigt nämlich die Differenz zwischen je aufeinander folgend abgefragten Meßwerten einen vorgegebenen Maximalverbrauch, so muß zusätzlich Kraftstoff entnommen werden. Die zeitlichen Abfrageperioden für die Überwachung des Kraftstoffverbrauches im Hinblick auf einen vorgegebenen Maximalwert können dabei in wesentlich kürzeren Zeitbereichen liegen als die Perioden für die Meßwertabfragung für die Bestimmung des Kraftstoffgesamtverbrauches. Es kann sogar die Abfragung der Meßwerte für die Bestimmung des Kraftstoffverbrauches von den periodischen Differenzbildungen her gesteuert werden, wenn beispielsweise bei einer festgestellten Kraftstoffzunahme der letzte Meßwert abgespeichert wird, um den niedrigsten Füllstand des Vorratsbehälters zu erhalten. In gleicher Weise kann nach einem Zunehmen des Füllstandes des Vorratsbehälters der maximale Füllstand ermittelt werden, indem der letzte Meßwert vor einer dem Zunehmen folgenden Abnahme des Kraftstoffes im Vorratsbehälter registriert wird, so daß sich aus den Werten nach einem Tanken und vor einem neuerlichen Tanken die verbrauchte Kraftstoffmenge errechnen läßt.

Patentansprüche:

1.    Vorrichtung zum Bestimmen des Kraftstoffgesamtverbrauches eines Kraftfahrzeuges mit einem Vorratsbehälter (1) für den Kraftstoff und einem Meßwertgeber
(2) für den Füllstand des Vorratsbehälters (1), dadurch
gekennzeichnet, daß der periodisch abfragbare Meßwertgeber (2) an zwei aus der Differenz zwischen jeweils zwei
aufeinanderfolgend abgefragten Meßwerten einerseits die
Zunahme und anderseits die Abnahme des Füllstandes des
Vorratsbehälters (1) bestimmenden Auswertungsschaltungen (3,4) angeschlossen ist, denen je ein Summenspeicher
(5, 8) mit einer Anzeigeeinrichtung (6,9) für die dem
Vorratsbehälter (1) insgesamt zugeführte bzw. aus dem
Vorratsbehälter (1) insgesamt entnommene Kraftstoffmenge nachgeordnet ist.

2.    Vorrichtung nach Anspruch 1, dadurch gekennzeichnet,
daß die Auswertungsschaltungen (3,4) einen vorzeichenabhängigen Differenzbildner (12) aufweisen, der einerseits
an den Meßwertgeber (2) und anderseits an ein Zwischenspeicher-Schieberegister (14) für den Meßwert angeschlossen ist.

3.    Vorrichtung nach Anspruch 1 oder 2, dadurch gekennzeichnet, daß zwischen der Auswertungsschaltung (4) für
die Abnahme des Füllstandes des Vorratsbehälters (1) und
dem Meßwertgeber (2) ein Mittelwertbildner (15) vorgesehen ist.

4.    Vorrichtung nach einem der Ansprüche 1 bis 3, dadurch
gekennzeichnet, daß die Auswertungsschaltung (3) für die
Zunahme des Füllstandes des Vorratsbehälters (1) über ein
UND-Gatter (16) ansteuerbar ist, das einerseits an den
Meßwertgeber (2) und anderseits an eine Anzeigeeinrichtung (17) für den Fahrzeugstillstand angeschlossen ist.

5.    Vorrichtung nach Anspruch 4, dadurch gekennzeichnet, daß die Anzeigeeinrichtung (17) für den Fahrzeugstillstand aus einem NOR-Gatter (20) besteht, das an
einen Geschwindigkeitsgeber (18) und an einen Geber
(19) für die Kraftstoffströmung in der Versorgungsleitung
(7) des Kraftfahrzeugmotors angeschlossen ist.

6.    Vorrichtung nach einem der Ansprüche 1 bis 5, dadurch
gekennzeichnet, daß der Füllstutzen (21) des Vorratsbehälters (1) mit einem Sperrgitter (22) verschlossen ist.

0088068

| EINSCHLÄGIGE DOKUMENTE | | | EP 83890007.4 |
|---|---|---|---|

| Kategorie | Kennzeichnung des Dokuments mit Angabe. soweit erforderlich. der maßgeblichen Teile | Betrifft Anspruch | KLASSIFIKATION DER ANMELDUNG (Int. Cl. 3) |
|---|---|---|---|
| A | <u>US - A - 4 244 210</u> (PROHASKA) <br> * Abstract; Fig. 1 * <br> -- | | G 01 F 9/00 |
| A | <u>AT - B - 89 969</u> (KREUTER) <br> * Seite 2, Zeilen 30-50; Fig. 2 * <br> ---- | | |

RECHERCHIERTE SACHGEBIETE (Int. Cl. 3)

G 01 F

Der vorliegende Recherchenbericht wurde für alle Patentansprüche erstellt.

| Recherchenort | Abschlußdatum der Recherche | Prüfer |
|---|---|---|
| WIEN | 14-06-1983 | STÖGER |